# EUROPEAN PATENT APPLICATION

(11) **EP 4 050 952 A1**
(43) Date of publication of application: **31.08.2022**
(21) Application number: 20893476.0
(22) Date of filing: 25.11.2020
(51) Int. Cl.: H04W 72/04

(54) **RESOURCE ALLOCATION METHOD, APPARATUS AND DEVICE**

(30) Priority: 25.11.2019 CN 201911169914
(71) Applicant: Huawei Technologies Co., Ltd., Shenzhen, Guangdong 518129 (CN)
(72) Inventor: LI, Jing, Shenzhen, Guangdong 518129 (CN); WU, Lihua, Shenzhen, Guangdong 518129 (CN)
(74) Representative: MERH-IP Matias Erny Reichl Hoffmann Patentanwälte PartG mbB
(86) International application number: PCT/CN2020/131467
(87) International publication number: WO 2021/104304

(57) **Abstract**

Embodiments of this application provide a resource allocation method, an apparatus, and a device, to improve uplink and downlink channel measurement accuracy while ensuring that an SRS resource can be allocated to each user equipment, thereby improving uplink and downlink transmission performance, for example, reducing a bit error rate of data transmission and improving a cell throughput. The method in embodiments of this application includes: An access network device sends first SRS resource allocation information to a first user equipment, where the first SRS resource allocation information indicates a first SRS resource, and a periodicity of the first SRS resource is a first periodicity. Then the access network device sends second SRS resource allocation information to the first user equipment, where the second SRS resource allocation information indicates a second SRS resource; and a periodicity of the second SRS resource is a second periodicity, and the second periodicity is shorter than the first periodicity; or the second SRS resource is an aperiodic SRS resource, where the first user equipment is a large-packet user equipment.

## Description

This application claims priority to Chinese Patent Application No. 201911169914.X, filed with the China National Intellectual Property Administration on November 25, 2019 and entitled "RESOURCE ALLOCATION METHOD, APPARATUS, AND DEVICE", which is incorporated herein by reference in its entirety.

### TECHNICAL FIELD

Embodiments of this application relate to the field of communication technologies, and in particular, to a resource allocation method, an apparatus, and a device.

### BACKGROUND

With development of communication technologies, the communication technologies are applied more widely, and the communication technologies are closely related to people's life. When a user needs to perform a service, a sounding reference signal (Sounding Reference Signal, SRS) may be used to measure uplink channel quality. Specifically, the SRS may perform functions of frequency-selective scheduling, power control, and timing advance on a user equipment (user equipment, UE). Then the UE may complete a required service based on an SRS resource allocated to the UE.

However, when there are a large quantity of UEs in a cell, SRS resources allocated to a plurality of UEs cannot satisfy requirements of all UEs. Consequently, uplink and downlink channel measurement is inaccurate, and uplink and downlink transmission performance deteriorates. For example, a bit error rate of data transmission increases, data is lost, or a cell throughput decreases.

### SUMMARY

Embodiments of this application provide a resource allocation method, an apparatus, and a device, to improve uplink and downlink channel measurement accuracy while ensuring that an SRS resource can be allocated to each user equipment, thereby improving uplink and downlink transmission performance, for example, reducing a bit error rate of data transmission and improving a cell throughput.

A first aspect of embodiments of this application provides a resource allocation method, including:
An access network device sends first SRS resource allocation information to a first user equipment, where the first SRS resource allocation information indicates a first SRS resource, and a periodicity of the first SRS resource is a first periodicity. In addition, the access network device sends second SRS resource allocation information to the first user equipment, where the second SRS resource allocation information indicates a second SRS resource; and a periodicity of the second SRS resource is a second periodicity, and the second periodicity is shorter than the first periodicity; or the second SRS resource is an aperiodic SRS resource, where the first user equipment is a large-packet user equipment.

In this embodiment of this application, when there are a large quantity of users in a cell, and a periodic SRS resource is allocated to a large-packet user equipment, at least one of a semi-persistent SRS resource or an aperiodic SRS resource is further allocated to the large-packet user equipment, to ensure that resources are preferentially allocated to the large-packet user equipment. In this way, this can improve uplink and downlink (beam forming, BF) performance of each user equipment and improve uplink and downlink channel measurement accuracy while ensuring that an SRS resource can be allocated to the user equipment, thereby improving uplink and downlink transmission performance, for example, reducing a bit error rate of data transmission and improving a cell throughput.

With reference to the first aspect of embodiments of this application, in a first implementation of the first aspect of embodiments of this application, the large-packet user equipment is a user equipment whose average service data volume within a time range is greater than or equal to a target threshold.

With reference to any one of the first aspect of embodiments of this application or the first implementation of the first aspect of embodiments of this application, in a second implementation of the first aspect of embodiments of this application, the access network device determines, based on a service data volume of the first user equipment within the time range, whether the first user equipment is the large-packet user equipment.

In this embodiment of this application, whether a user equipment is a large-packet user equipment is determined by collecting statistics about a service data volume of the user equipment within the time range. In addition, because the large-packet user equipment is a user equipment with a large service data volume, after the large-packet user equipment is determined, the semi-persistent SRS resource or the aperiodic SRS resource may be sent to the large-packet user equipment, so that the large-packet user equipment can still obtain good BF performance when there are a large quantity of user equipments. In this way, uplink and downlink transmission performance is improved, and feasibility of this application is improved.

With reference to any one of the first aspect of embodiments of this application or the first implementation of the first aspect of embodiments of this application, in a third implementation of the first aspect of embodiments of this application, the access network device is a target access network device, and the access network device receives a handover message from a source access network device, where the handover message includes information used to indicate that the first user equipment is a large-packet user equipment.

In this embodiment of this application, the access network device may indicate, based on information included in the handover message, whether the first user equipment is a large-packet user equipment, and the first user equipment can also be determined as the large-packet user equipment in time in a moving process, to send the semi-persistent SRS resource or the aperiodic SRS resource in time, thereby improving resource allocation efficiency and improving feasibility of this application.

With reference to any one of the first aspect of embodiments of this application to the third implementation of the first aspect of embodiments of this application, in a fourth implementation of the first aspect of embodiments of this application, the access network device sends the second SRS resource allocation information to a second user equipment, where the second user equipment is a large-packet user equipment. In addition, the access network device activates the second SRS resource for the first user equipment or the second user equipment simultaneously.

With reference to the fourth implementation of the first aspect of embodiments of this application, in a fifth implementation of the first aspect of embodiments of this application, when activating the second SRS resource for the first user equipment, the access network device starts a timer; and after the timer expires, the access network device deactivates the second SRS resource for the first user equipment, and activates the second SRS resource for the second user equipment.

In this embodiment of this application, when only one set of semi-persistent SRS resources is allocated to each user equipment, and a collision on the semi-persistent SRS resources occurs, the semi-persistent SRS resources are activated among the user equipments in a round-robin manner by using the timer. This ensures a service requirement, and improves uplink and downlink BF performance of the user equipment. In addition, RRC signaling reconfiguration can be avoided, and RRC signaling reconfiguration overheads can be reduced.

With reference to any one of the first aspect of embodiments of this application to the third implementation of the first aspect of embodiments of this application, in a sixth implementation of the first aspect of embodiments of this application, the second SRS resource allocation information further indicates a third SRS resource, a periodicity of the third SRS resource is a third periodicity, the third periodicity is shorter than the first periodicity, and the method further includes:

The access network device sends the second SRS resource allocation information to a second user equipment, where the second user equipment is a large-packet user equipment; and
when activating the second SRS resource for the first user equipment, the access network device activates the third SRS resource for the second user equipment; or when activating the third SRS resource for the first user equipment, the access network device activates the second SRS resource for the second user equipment.

In this embodiment of this application, after being activated by the access network device, an activated semi-persistent SRS resource can be used by a user equipment that encounters a collision. This reduces RRC signaling reconfiguration, thereby reducing RRC signaling overheads.

A second aspect of embodiments of this application provides a resource allocation method, including:

A first user equipment receives first SRS resource allocation information from an access network device, where the first SRS resource allocation information indicates a first SRS resource, and a periodicity of the first SRS resource is a first periodicity. In addition, the first user equipment receives second SRS resource allocation information from the access network device, where the second SRS resource allocation information indicates a second SRS resource; and a periodicity of the second SRS resource is a second periodicity, and the second periodicity is shorter than the first periodicity; or the second SRS resource is an aperiodic SRS resource, where the first user equipment is a large-packet user equipment.

In this embodiment of this application, when there are a large quantity of users in a cell, the first user equipment may receive a periodic SRS resource from the access network device. Further, when the first user equipment is a large-packet user equipment, the first user equipment may further receive at least one of a semi-persistent SRS resource or an aperiodic SRS resource from the access network device, to ensure that resources are preferentially allocated to the large-packet user equipment. In this way, this can improve uplink and downlink BF performance of each user equipment and improve uplink and downlink channel measurement accuracy while ensuring that an SRS resource can be allocated to the user equipment, thereby improving uplink and downlink transmission performance, for example, reducing a bit error rate of data transmission and improving a cell throughput.

With reference to the second aspect of embodiments of this application, in a first implementation of the second aspect of embodiments of this application, the large-packet user equipment is a user equipment whose average service data volume within a time range is greater than a target threshold.

According to a third aspect, an embodiment of this application provides a resource allocation apparatus. The resource allocation apparatus may be an access network device or a chip in the access network device. The resource allocation apparatus includes a processor, and the processor is configured to execute a computer program or instructions, so that the resource allocation apparatus performs the method in the first aspect.

Optionally, the resource allocation apparatus further includes a memory. The processor is coupled to the memory, the memory is configured to store the computer program or the instructions, and the processor is configured to execute the computer program or the instructions in the memory.

Optionally, the resource allocation apparatus may further include a communication unit. The communication unit is configured to communicate with another device or another component in the resource allocation apparatus. For example, the resource allocation apparatus is an access network device, and the communication unit is a transceiver. For example, the resource allocation apparatus is a chip in the access network device, and the communication unit is an input/output circuit or an interface of the chip.

According to a fourth aspect, an embodiment of this application provides a resource allocation apparatus. The resource allocation apparatus may be a terminal or a chip in the terminal. The resource allocation apparatus includes a processor, and the processor is configured to execute a computer program or instructions, so that the resource allocation apparatus performs the method in the second aspect.

Optionally, the resource allocation apparatus further includes a memory. The processor is coupled to the memory, the memory is configured to store the computer program or the instructions, and the processor is configured to execute the computer program or the instructions in the memory.

Optionally, the resource allocation apparatus may further include a communication unit. The communication unit is configured to communicate with another device or another component in the resource allocation apparatus. For example, the resource allocation apparatus is a terminal, and the communication unit is a transceiver. For example, the resource allocation apparatus is a chip in the terminal, and the communication unit is an input/output circuit or an interface of the chip.

According to a fifth aspect, an embodiment of this application provides a chip, where the chip includes a processor and an interface circuit, the interface circuit is coupled to the processor, and the processor is configured to run a computer program or instructions to implement the method according to the first aspect or the second aspect, the interface circuit is configured to communicate with a module other than the chip.

According to a sixth aspect, an embodiment of this application provides a computer storage medium, storing a program used to implement the method according to the first aspect or the second aspect. When the program is run in a radio resource allocation apparatus, the radio resource allocation apparatus is enabled to perform the method according to the first aspect or the second aspect.

According to a seventh aspect, an embodiment of this application provides a computer program product. The program product includes a program. When the program is run, the method according to the first aspect or the second aspect is enabled to be performed.

According to an eighth aspect, an embodiment of this application provides a communication system, including the terminal (or the chip in the terminal) in the method in the first aspect and the access network device (or the chip in the access network device) in the method in the second aspect. Alternatively, the communication system includes the resource allocation apparatus in the third aspect and the resource allocation apparatus in the fourth aspect.

It can be learned from the foregoing technical solutions that embodiments of this application have the following advantages:

When there are a large quantity of user equipments in the cell, a large-packet user and a non-large-packet user are classified, and the aperiodic SRS resource or SRS resources with different periodicity lengths are allocated to the large-packet user, to improve uplink and downlink channel measurement accuracy while ensuring that the SRS resource can be allocated to each user equipment, thereby improving uplink and downlink transmission performance, for example, reducing the bit error rate of data transmission and improving the cell throughput.

### BRIEF DESCRIPTION OF DRAWINGS

FIG. 1 is a schematic diagram of a system architecture of a communication system according to an embodiment of this application;
FIG. 2A is a schematic diagram of a structure of an access network device according to an embodiment of this application;
FIG. 2B is a schematic diagram of a structure of a terminal according to an embodiment of this application;
FIG. 2C is a schematic diagram of a structure of a core network element according to an embodiment of this application;
FIG. 3 is a schematic diagram of an embodiment of a resource allocation method according to an embodiment of this application;
FIG. 4A is a schematic diagram of resource allocation according to an embodiment of this application;
FIG. 4B is another schematic diagram of resource allocation according to an embodiment of this application;
FIG. 4C is another schematic diagram of resource allocation according to an embodiment of this application;
FIG. 5 is a schematic diagram of another embodiment of a resource allocation method according to an embodiment of this application;
FIG. 6A is a schematic diagram of an embodiment of a round-robin scheduling method according to an embodiment of this application;
FIG. 6B is a schematic diagram of another embodiment of a round-robin scheduling method according to an embodiment of this application;
FIG. 7 is a schematic diagram of an embodiment of a method for configuring a plurality of sets of resources according to an embodiment of this application;
FIG. 8 is a schematic diagram of another embodiment of a resource allocation method according to an embodiment of this application; and
FIG. 9 is a schematic diagram of a structure of a communication apparatus according to an embodiment of this application.

### DESCRIPTION OF EMBODIMENTS

Embodiments of this application provide a resource allocation method, an apparatus, and a device, to improve uplink and downlink channel measurement accuracy while ensuring that an SRS resource can be allocated to each user equipment, thereby improving uplink and downlink transmission performance, for example, reducing a bit error rate of data transmission and improving a cell throughput.

To better understand the resource allocation method, the apparatus, and the device that are disclosed in embodiments of this application, the following describes the technical solutions in this application with reference to the accompanying drawings in this application.

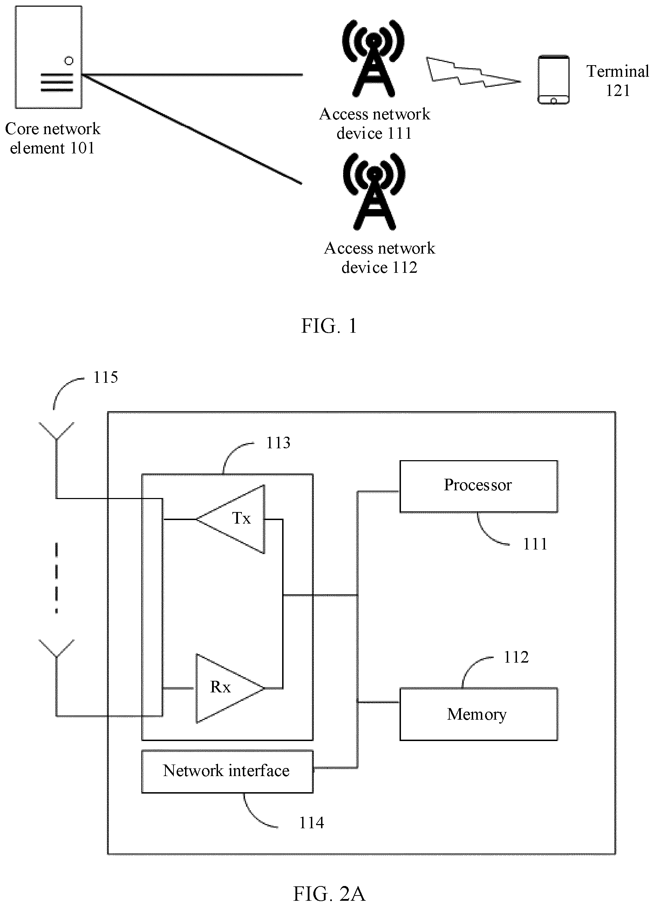

First, a system architecture of a communication system used in embodiments of the present invention is described. FIG. 1 is a schematic diagram of a system architecture of a communication system according to an embodiment of this application. The technical solutions in embodiments of this application are applicable to the communication system shown in FIG. 1. The communication system includes a core network element 101, an access network device 111, and an access network device 112. The core network element 101 may be connected to the access network device 111 and the access network device 112. A terminal 121 may communicate with the access network device 111. It should be noted that the core network element, the base stations, and the terminal that are included in the communication system shown in FIG. 1 are merely an example, and an interface connection relationship between the base stations is also merely an example. In this embodiment of this application, types and quantities of network elements included in the communication system and a connection relationship between the network elements are not limited thereto.

The communication system may be a communication system that supports a fourth generation (fourth generation, 4G) access technology, for example, a long term evolution (long term evolution, LTE) access technology. Alternatively, the communication system may be a communication system that supports a fifth generation (fifth generation, 5G) access technology, for example, a new radio (new radio, NR) access technology. Alternatively, the communication system may be a communication system that supports a third generation (third generation, 3G) access technology, for example, a universal mobile telecommunications system (universal mobile telecommunications system, UMTS) access technology. Alternatively, the communication system may be a communication system that supports a second generation (second generation, 2G) access technology, for example, a global system for mobile communications (global system for mobile communications, GSM) access technology. Alternatively, the communication system may be a communication system that supports a plurality of radio technologies, for example, a communication system that supports an LTE technology and an NR technology. In addition, the communication system may alternatively be applied to a future-oriented communication technology.

The access network device 111 and the access network device 112 in FIG. 1 each may be a device configured to support a terminal in accessing a communication system on an access network side, for example, may be a base transceiver station (base transceiver station, BTS) and a base station controller (base station controller, BSC) in the communication system that supports the 2G access technology, a NodeB (NodeB) and a radio network controller (radio network controller, RNC) in the communication system that supports the 3G access technology, and an evolved NodeB (evolved NodeB, eNB) in the communication system that supports the 4G access technology, a next generation NodeB (next generation NodeB, gNB), a transmission reception point (transmission reception point, TRP), a relay node (relay node), and an access point (access point, AP) in the communication system that supports the 5G access technology, or the like.

The core network element 101 in FIG. 1 may control one or more access network devices, or manage resources in the system in a unified manner, or may configure a resource for a terminal. For example, the core network element may be a serving general packet radio service (general packet radio service, GPRS) support node (serving GPRS support node, SGSN) or a gateway GPRS support node (gateway GPRS support node, GGSN) in the communication system that supports the 3G access technology, a mobility management entity (mobile management entity, MME) or a serving gateway (serving gateway, SGW) in the communication system that supports the 4G access technology, an access and mobility management function (Access and Mobility Management Function, AMF) network element or a user plane function (User Plane Function, UPF) network element in the communication system that supports the 5G access technology, or the like.

The terminal 121 in FIG. 1 may be a device that provides voice or data connectivity for a user. For example, the terminal may also be referred to as a user equipment (user equipment, UE), a mobile station (mobile station), a subscriber unit (subscriber unit), a station (station), or a terminal equipment (terminal equipment, TE). The terminal may be a cellular phone (cellular phone), a personal digital assistant (personal digital assistant, PDA), a radio modem (modem), a handheld (handheld) device, a laptop computer (laptop computer), a cordless phone (cordless phone), a wireless local loop (wireless local loop, WLL) station, a tablet (pad), or the like. With development of wireless communication technologies, a device that can access a communication system, a device that can communicate with a network side in the communication system, or a device that can communicate with another object by using the communication system may be the terminal in this embodiment of this application, for example, a terminal and a vehicle in intelligent transportation, a household device in a smart household, an electricity meter reading instrument in a smart grid, a voltage monitoring instrument, an environment monitoring instrument, a video surveillance instrument in an intelligent security network, or a cashing machine. In this embodiment of this application, the terminal may communicate with an access network device, for example, the access network device 111 or the access network device 112. A plurality of terminals may communicate with each other. The terminal may be stationary or mobile.

Specifically, the following separately describes an access network device, a terminal, and a core network element in a communication system in detail.

FIG. 2A is a schematic diagram of a structure of an access network device according to an embodiment of this application. For a structure of the access network device 111 and the access network device 112 shown in FIG. 1, refer to the structure shown in FIG. 2A.

The access network device includes at least one processor 111, at least one memory 112, at least one transceiver 113, at least one network interface 114, and one or more antennas 115. The processor 111, the memory 112, the transceiver 113, and the network interface 114 are connected, for example, through a bus. In this embodiment of this application, the connection may include various interfaces, transmission lines, buses, or the like. This is not limited in this embodiment. The antenna 115 is connected to the transceiver 113. The network interface 114 is configured to connect the access network device to another communication device by using a communication link. For example, the network interface 114 may include a network interface between the access network device and a core network element, for example, an S1 interface; the network interface may include a network interface between the access network device and another network device (for example, another access network device or a core network element), for example, an X2 interface or an Xn interface.

The processor 111 is mainly configured to process a communication protocol and communication data, control the entire access network device, execute a software program, and process data of the software program, for example, configured to support the access network device in performing an action described in embodiments. The access network device may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 111 in FIG. 2A. A person skilled in the art may understand that the baseband processor and the central processing unit may alternatively be processors independent of each other, and are interconnected by using a technology such as a bus. A person skilled in the art can understand that the terminal device may include a plurality of baseband processors to adapt to different network standards, the terminal device may include a plurality of central processing units to enhance a processing capability of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store a software program and data. The memory 112 may exist independently, and is connected to the processor 111. Optionally, the memory 112 and the processor 111 may be integrated together, for example, integrated into a chip. The memory 112 can store program code that executes the technical solutions in embodiments of this application, and the processor 111 controls execution. Various types of computer program code that are executed may also be considered as drivers of the processor 111.

FIG. 2A only shows one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or may be an independent storage element. This is not limited in this embodiment of this application.

The transceiver 113 may be configured to support receiving or sending of a radio frequency signal between the access network device and the terminal, and the transceiver 113 may be connected to the antenna 115. The transceiver 113 includes a transmitter Tx and a receiver Rx. Specifically, the one or more antennas 115 may receive the radio frequency signal. The receiver Rx in the transceiver 113 is configured to receive the radio frequency signal from the antenna, convert the radio frequency signal into a digital baseband signal or a digital intermediate frequency signal, and provide the digital baseband signal or the digital intermediate frequency signal for the processor 111, so that the processor 111 further processes the digital baseband signal or the digital intermediate frequency signal, for example, performs demodulation processing and decoding processing. In addition, the transmitter Tx in the transceiver 113 is further configured to receive a modulated digital baseband signal or digital intermediate frequency signal from the processor 111, convert the modulated digital baseband signal or digital intermediate frequency signal into a radio frequency signal, and send the radio frequency signal through the one or more antennas 115. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as digital signals.

The transceiver may also be referred to as a transceiver unit, a transceiver, a transceiver apparatus, or the like. Optionally, a component that is in the transceiver unit and that is configured to implement a receiving function may be considered as a receiving unit. A component that is in the transceiver unit and that is configured to implement a sending function may be considered as a sending unit. That is, the transceiver unit includes the receiving unit and the sending unit. The receiving unit may also be referred to as a receiver, an input port, a receiver circuit, or the like. The sending unit may be referred to as a transmitter, a transmitter, a transmitter circuit, or the like.

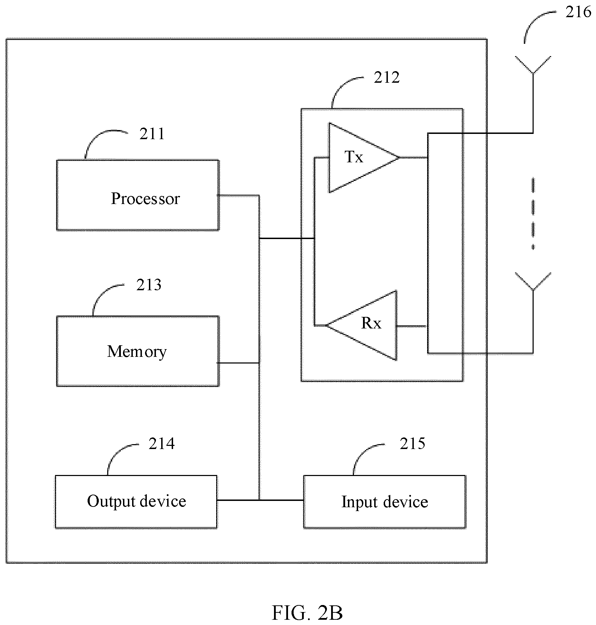

FIG. 2B is a schematic diagram of a structure of a terminal according to an embodiment of this application. For a structure of the terminal 121 shown in FIG. 1, refer to the structure shown in FIG. 2B.

The terminal includes at least one processor 211, at least one transceiver 212, and at least one memory 213. The processor 211, the memory 213, and the transceiver 212 are connected. Optionally, the terminal may further include an output device 214, an input device 215, and one or more antennas 216. The antenna 216 is connected to the transceiver 212, and the output device 214 and the input device 215 are connected to the processor 211.

The transceiver 212, the memory 213, and the antenna 216 may implement similar functions with reference to related descriptions in FIG. 2A.

The processor 211 may be a baseband processor, or may be a CPU. The baseband processor and the CPU may be integrated or separated.

The processor 211 may be configured to implement various functions for the terminal, for example, configured to process a communication protocol and communication data, or configured to control the entire terminal device, execute a software program, and process data of the software program; or configured to assist in completing a computing processing task, for example, graphics and image processing or audio processing. Alternatively, the processor 211 is configured to implement one or more of the foregoing functions.

The output device 214 communicates with the processor 211, and may display information in a plurality of manners. For example, the output device 214 may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device 215 communicates with the processor 211, and may receive an input of a user in a plurality of manners. For example, the input device 215 may be a mouse, a keyboard, a touchscreen device, or a sensor device.

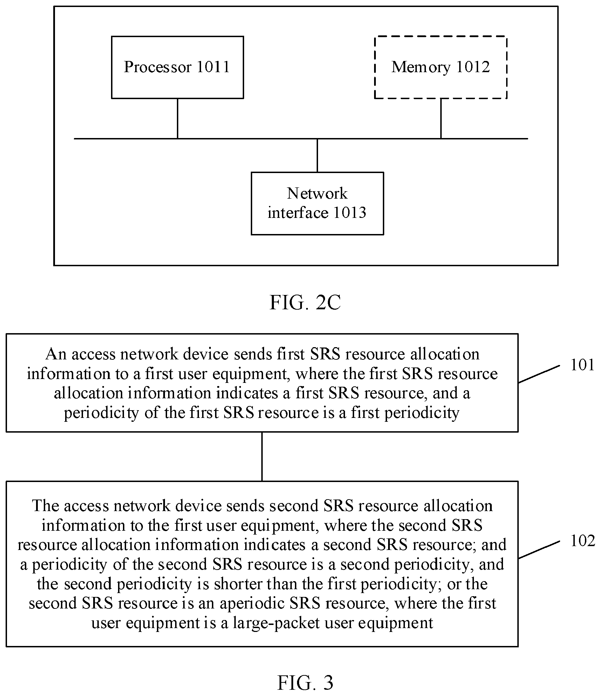

FIG. 2C is a schematic diagram of a structure of a core network element according to an embodiment of this application, for example, the core network element 101 shown in FIG. 1.

The core network element includes at least one processor 1011, at least one memory 1012, and at least one network interface 1013. The memory 1012, the processor 1011, and the network interface 1013 are connected.

The processor 1011 may be configured to implement various functions for the core network element, for example, control one or more access network devices, manage resources in a system in a unified manner, or configure a resource for a terminal.

The memory 1012 may be configured to store program code for executing the technical solutions in embodiments of this application, and the technical solutions are executed by the processor 1011, to implement a function of the core network element in this embodiment of this application.

The core network element may communicate with the access network device or the terminal by using the network interface 1013, for example, send data to the access network device or the terminal, or receive data from the access network device or the terminal.

Further, the following describes in detail the resource allocation method used in embodiments of this application and performed by an access network device. FIG. 3 is a schematic diagram of an embodiment of a resource allocation method according to an embodiment of this application.

101. The access network device sends first SRS resource allocation information to a first user equipment, where the first SRS resource allocation information indicates a first SRS resource, and a periodicity of the first SRS resource is a first periodicity.

In this embodiment, the access network device may send the first SRS resource allocation information to the first user equipment first, where the first SRS resource allocation information may indicate the first SRS resource, and the periodicity of the first SRS resource is the first periodicity.

Specifically, the first SRS resource may be a periodic SRS resource. The periodic SRS resource may be configured for the first user equipment by using radio resource controller (radio resource controller, RRC) signaling. After the periodic SRS resource is configured for the first user equipment, the resource has been activated, and may not need to be triggered by other signaling. Further, the periodic SRS resource may further be periodically sent to the first user equipment, and different first periodicities may be configured based on different quantities of users in a cell. It should be understood that, during actual application, the first periodicity may be but is not limited to 5 ms, 10 ms, 20 ms, 40 ms, 320 ms, or 640 ms.

102. The access network device sends second SRS resource allocation information to the first user equipment, where the second SRS resource allocation information indicates a second SRS resource; and a periodicity of the second SRS resource is a second periodicity, and the second periodicity is shorter than the first periodicity; or the second SRS resource is an aperiodic SRS resource, where the first user equipment is a large-packet user equipment.

In this embodiment, the access network device may further send the second SRS resource allocation information to the first user equipment, where the second SRS resource allocation information may indicate the second SRS resource. When the second SRS resource is a periodic SRS resource, the periodicity of the second SRS resource may be the second periodicity, and the second periodicity is shorter than the first periodicity. Alternatively, the second SRS resource may be an aperiodic SRS resource. The first user equipment is a large-packet user equipment.

Specifically, when the second SRS resource is a periodic SRS resource, the second SRS resource in this application may be specifically a semi-persistent SRS resource. Similar to the periodic SRS resource, the semi-persistent SRS resource may be configured for the first user equipment by using RRC signaling. However, different from the periodic SRS resource, the resource has not been activated yet after the semi-persistent SRS resource is configured for the first user equipment, and the semi-persistent SRS resource needs to be activated by using media access control-control element (media access control-control element, MAC CE) signaling. The activated semi-persistent SRS resource may be equivalent to a periodic SRS resource. However, a semi-persistent SRS resource configured in a cell is limited. After use of the semi-persistent SRS resource by the first user equipment is completed, the semi-persistent SRS resource further needs to be deactivated by using the MAC CE signaling. The semi-persistent SRS resource can be released only after the semi-persistent SRS resource is deactivated, and then is used by another user equipment. It should be understood that, during actual application, the second periodicity corresponding to the semi-persistent SRS resource may be but is not limited to 5 ms, 10 ms, 20 ms, or 40 ms, but the second periodicity is shorter than the first periodicity.

In addition, the second SRS resource may alternatively be an aperiodic SRS resource. The aperiodic SRS resource may be configured for the first user equipment by using RRC signaling. After the aperiodic SRS resource is configured for the first user equipment, the aperiodic SRS resource has not been activated yet, and the aperiodic SRS resource of the first user equipment needs to be triggered by using downlink control information (downlink control information, DCI) on a physical downlink control channel (physical downlink control channel, PDCCH). Specifically, the DCI on the PDCCH may identify an identifier carried on a service packet of a user equipment, and then trigger the aperiodic SRS resource, to indicate that the aperiodic SRS resource is available, and the aperiodic SRS resource can be used only once and does not need to be deactivated.

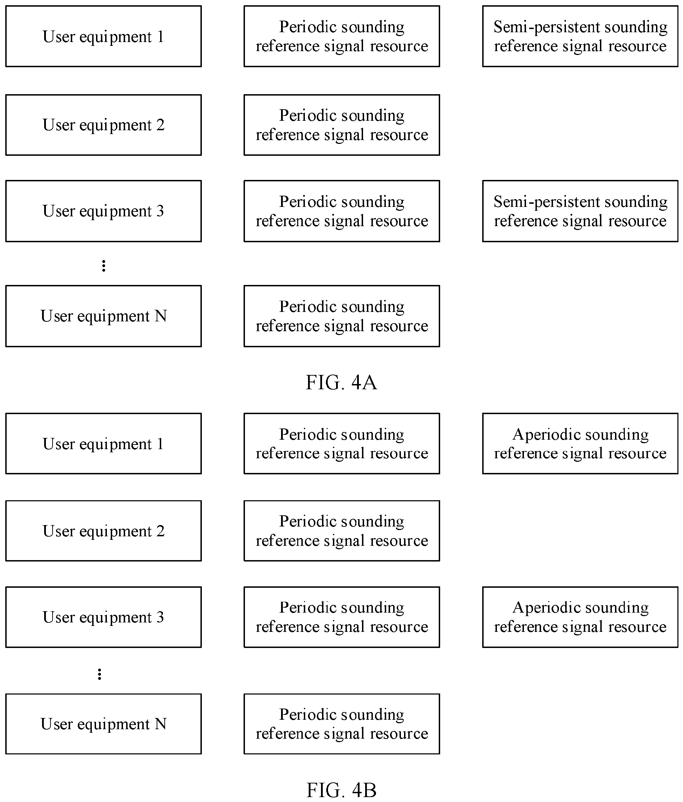

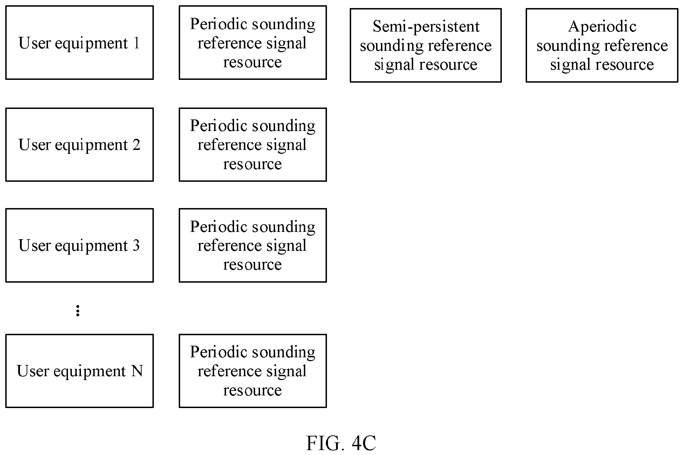

For ease of understanding, FIG. 4A, FIG. 4B, and FIG. 4C each are a schematic diagram of resource allocation according to an embodiment of this application. As shown in FIG. 4A, a user equipment 1 and a user equipment 3 in FIG. 4A are large-packet user equipments, an access network device may allocate periodic SRS resources and semi-persistent SRS resources to the user equipment 1 and the user equipment 3. In addition, in another possibility, as shown in FIG. 4B, a user equipment 1 and a user equipment 3 are large-packet user equipments, and an access network device may allocate periodic SRS resources and aperiodic SRS resources to the user equipment 1 and the user equipment 3. Further, in another possibility, as shown in FIG. 4C, a user equipment 1 is a large-packet user equipment, and an access network device may allocate a periodic SRS resource, a semi-persistent SRS resource, and an aperiodic SRS resource to the user equipment 1. It should be noted that, in FIG. 4A to FIG. 4C, a periodicity corresponding to a semi-persistent SRS resource may be shorter than a periodicity corresponding to the periodic SRS resource. Therefore, when there are a large quantity of users in a cell, and a periodic SRS resource is allocated to a large-packet user equipment, at least one of a semi-persistent SRS resource or an aperiodic SRS resource is further allocated to the large-packet user equipment, to ensure that resources are preferentially allocated to the large-packet user equipment. In this way, this can improve uplink and downlink BF performance of each user equipment and improve uplink and downlink channel measurement accuracy while ensuring that an SRS resource can be allocated to the user equipment, thereby improving uplink and downlink transmission performance, for example, reducing a bit error rate of data transmission and improving a cell throughput.

Optionally, the large-packet user equipment is a user equipment whose average service data volume within a time range is greater than or equal to a target threshold.

It should be understood that, during actual application, the large-packet user equipment may be determined by using a maximum value or a minimum value of a service data flow within the time range or through a comparison between a service data volume obtained by performing an operation within the time range and the target threshold. In this application, the large-packet user equipment is determined by using the average service data volume. This should not be understood as that this application is limited thereto.

Further, the access network device may determine, based on a service data volume of the first user equipment within the time range, whether the first user equipment is a large-packet user equipment.

For example, the access network device may determine, by using a service identification policy, whether the first user equipment is a large-packet user equipment. For example, first, the access network device may configure a determining threshold in a large-packet service identification policy of a device as A, where A may be 1 Mbyte. It should be understood that, during actual application, A may be configured by the access network device based on a quantity of users and a quantity of resources in the cell. A specific value of A should not be used as a limitation on this application. Then, the access network device may collect statistics about an average throughput of each bearer within a time range, where the average throughput may be a traffic handling priority (Traffic Handling Priority, THP). When the THP is greater than or equal to the determining threshold A, that is, when a service data volume of a user equipment within the time range is greater than or equal to the determining threshold A, the access network device may determine that the user equipment is a large-packet user equipment, and service attribute flag information is "1", that is, a large-packet user identifier. On the contrary, when the THP is less than the determining threshold A, that is, when a service data volume of a user equipment within the time range is less than the determining threshold A, the access network device may determine that the user equipment is a non-large-packet user equipment, and service attribute flag information is "0", that is, a non-large-packet user identifier. Therefore, before resource information is allocated to the user equipment, whether the user equipment is a large-packet user equipment is determined by collecting statistics about the service data volume of the user equipment within the time range. In addition, because the large-packet user equipment is a user equipment with a large service data volume, after the large-packet user equipment is determined, the semi-persistent SRS resource or the aperiodic SRS resource may be sent to the large-packet user equipment, so that the large-packet user equipment can still obtain good BF performance when there are a large quantity of user equipments. In this way, uplink and downlink transmission performance is improved, and feasibility of this application is improved.

Optionally, when the access network device is a target access network device, the access network device may receive a handover message from a source access network device, where the handover message includes information used to indicate that the first user equipment is a large-packet user equipment.

Specifically, when the first user equipment is in a moving state, for example, when the first user equipment is in a moving transport means, because the transport means usually moves in real time and at a high speed, and the first user equipment may be handed over between different cells in a short time, that is, the access network device cannot determine, in time by using only the foregoing service identification policy, whether the first user equipment is a large-packet user equipment, the target access network device may receive a handover message when the first user equipment is handed over from the source access network device to the target access network device, where the handover message includes the information used to indicate that the first user equipment is a large-packet user equipment, that is, the foregoing large-packet user identifier. In this way, the target access network device may determine, based on the large-packet user identifier, that the first user equipment is a large-packet user equipment, to send the foregoing first SRS resource allocation information and the foregoing second SRS resource allocation information to the first user equipment. In addition, the handover message may further include a non-large-packet user identifier. The target access network device may alternatively determine, based on the non-large-packet user identifier, that the first user equipment is a non-large-packet user equipment, to send the first SRS resource allocation information only to the first user equipment.

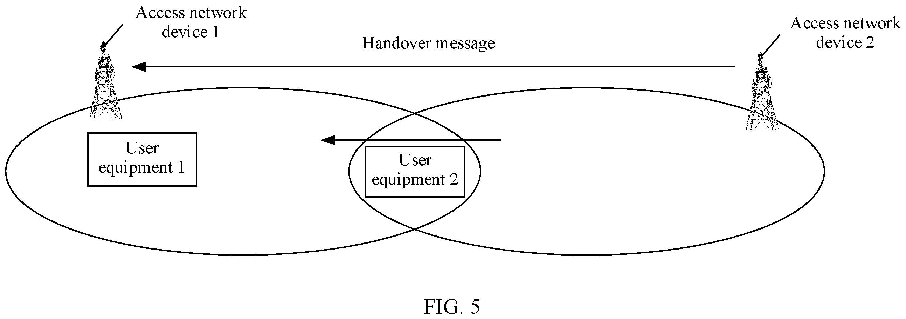

For ease of understanding, FIG. 5 is a schematic diagram of another embodiment of a resource allocation method according to an embodiment of this application. As shown in the figure, a user equipment 1 is located in a cell range covered by an access network device 1. Therefore, the access network device 1 may determine, according to a service identification policy, whether the user equipment 1 is a large-packet user equipment. If service attribute flag information is "1", the user equipment 1 is the large-packet user equipment. If service attribute flag information is "0", the user equipment 1 is a non-large-packet user equipment. In addition, a user equipment 2 is moving from a cell range covered by an access network device 2 to the cell range covered by the access network device 1. For the user equipment 2, the access network device 2 is a source access network device, and the access network device 1 is a target access network device. Therefore, when moving to a position shown in the figure, the access network device 2 may send handover information to the access network device 1. The access network device 1 may determine, based on service attribute flag information carried in the handover information, whether the user equipment 2 is a large-packet user equipment. If the service attribute flag information is "1", the user equipment 2 is a large-packet user equipment. If the service attribute flag information is "0", the user equipment 2 is a non-large-packet user equipment. Therefore, the access network device may indicate, based on the service attribute flag information in the handover message, whether the first user equipment is a large-packet user equipment, and the first user equipment can also be determined as a large-packet user equipment in time in a moving process, to send the semi-persistent SRS resource or the aperiodic SRS resource in time, thereby improving resource allocation efficiency, and improving feasibility of this application.

It should be understood that because a quantity of semi-persistent SRS resources that can be allocated is limited, the access network device allocates one set of semi-persistent SRS resources to one user equipment. For the set of semi-persistent SRS resources, only one user equipment can be activated at a same moment, and the semi-persistent SRS resources can be activated and used by another user equipment only after being deactivated and then released. Therefore, when a same set of semi-persistent SRS resources is allocated to a plurality of user equipments, if at least two user equipments simultaneously have corresponding service requirements, only one user equipment can be successfully activated, and a semi-persistent SRS resource collision occurs between another user and the user equipment. Consequently, the semi-persistent SRS resources fail to be activated. Currently, another semi-persistent SRS resource may be reallocated in an RRC signaling reconfiguration manner, to provide a service for the user equipment. However, RRC signaling reconfiguration overheads are increased, and resource allocation efficiency is reduced.

It should be noted that, the foregoing semi-persistent SRS resource collision problem may be resolved by using a round-robin scheduling method or by using a method in which that a plurality of sets of semi-persistent SRS resources are configured for user equipments is supported. The following separately describes the two methods.

### 1. Round-robin scheduling:

First, the access network device may send the second SRS resource allocation information to a second user equipment, where the second user equipment is a large-packet user equipment. In addition, the access network device activates the second SRS resource for the first user equipment or the second user equipment simultaneously.

Further, when the access network device activates the second SRS resource for the first user equipment, the access network device starts a timer. After the timer expires, the access network device deactivates the second SRS resource for the first user equipment, and activates the second SRS resource for the second user equipment.

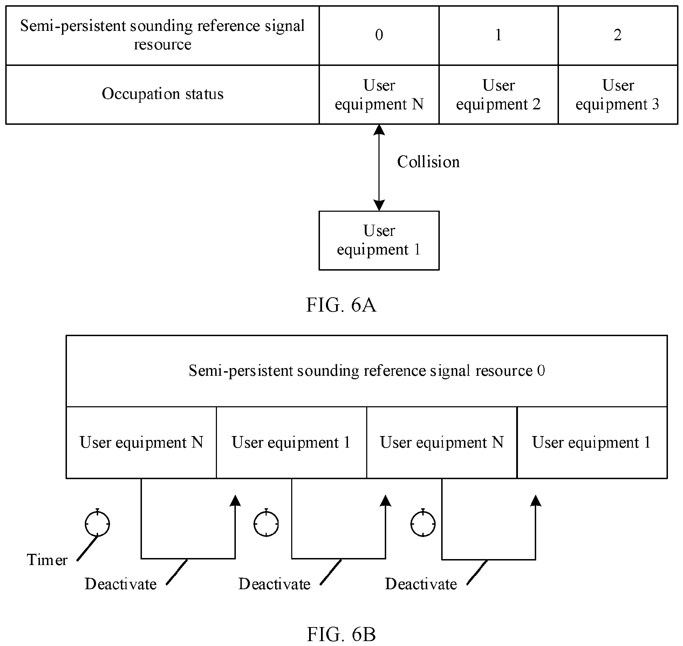

For ease of understanding, FIG. 6A and FIG. 6B each are a schematic diagram of an embodiment of a round-robin scheduling method according to an embodiment of this application. As shown in FIG. 6A, a semi-persistent SRS resource 0 is allocated to a UE 1 identified as a large-packet user equipment, a semi-persistent SRS resource 1 is allocated to a UE 2 identified as a large-packet user equipment, a semi-persistent SRS resource 2 is allocated to a UE 3 identified as a large-packet user equipment, and the semi-persistent SRS resource 0 is allocated to a UE N identified as a large-packet user equipment. In other words, a same semi-persistent SRS resource 0 is allocated to the UE 1 and the UE N. First, the access network device may determine service requirements of the UE 1 and the UE N depending on whether there is an uplink scheduling request message. If both the UE 1 and the UE N have the service requirements, but the UE N preferentially sends an uplink scheduling request to the access network device, the access network device activates the semi-persistent SRS resource 0 for the UE N. Then, when the UE 1 sends an uplink scheduling request to the access network device, a collision occurs on the semi-persistent SRS resource 0.

Further, after a resource collision occurs, refer to FIG. 6B. As shown in FIG. 6B, the access network device may activate the semi-persistent SRS resource 0 of the UE N by using a MAC CE, and start a timer of the access network device. Duration of the timer may be Is. During working time of the timer, the UE N continuously occupies the semi-persistent SRS resource 0. When the duration of the timer reaches Is, whether the UE 1 currently has a service requirement further needs to be determined first. If the UE 1 currently has the service requirement, the access network device may deactivate the semi-persistent SRS resource 0 of the UE N by using the MAC CE, activate the semi-persistent SRS resource 0 of the UE 1 by using the MAC CE, and then continue to start the timer of the access network device. Duration of the timer may be Is. When the duration of the timer reaches Is, the foregoing similar steps continue to be repeated until the UE 1 and the UE N complete the service requirements. It should be understood that, during actual application, the timer may alternatively be 2s, 4s, or 8s. Therefore, the duration of the timer should not be construed as a limitation on this application.

In this embodiment, when only one set of semi-persistent SRS resources is allocated to each user equipment, and a collision on the semi-persistent SRS resources occurs, the semi-persistent SRS resources are activated among the user equipments in a round-robin manner by using the timer. This ensures a service requirement, and improves uplink and downlink BF performance of the user equipment. In addition, RRC signaling reconfiguration can be avoided, and RRC signaling reconfiguration overheads can be reduced.

### 2. The user equipment configures a plurality of sets of semi-persistent SRS resources:

When the second SRS resource allocation information further indicates a third SRS resource, a periodicity of the third SRS resource is a third periodicity, and the third periodicity is shorter than the first periodicity, the access network device may first send the second SRS resource allocation information to a second user equipment, where the second user equipment is a large-packet user equipment. In addition, when activating the second SRS resource for the first user equipment, the access network device activates the third SRS resource for the second user equipment; or when activating the third SRS resource for the first user equipment, the access network device activates the second SRS resource for the second user equipment.

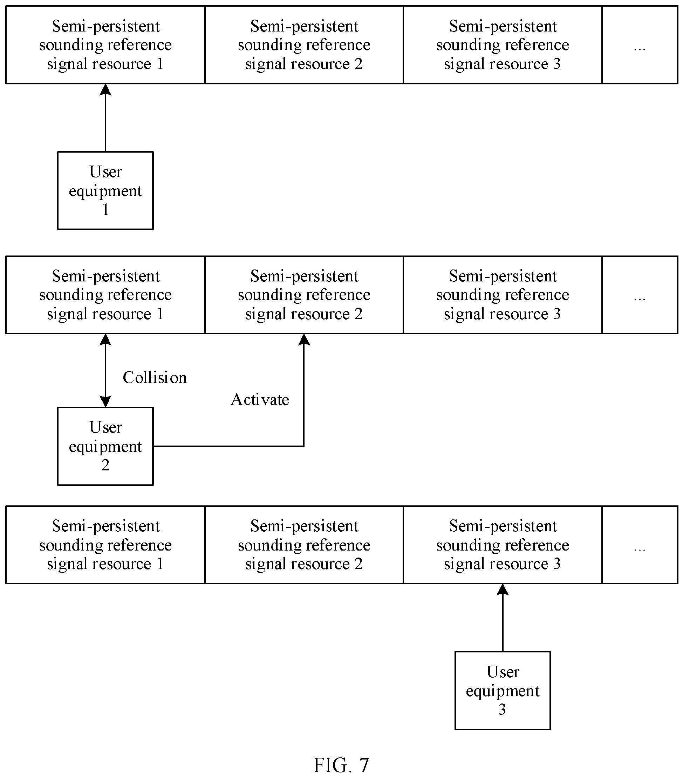

For ease of understanding, FIG. 7 is a schematic diagram of an embodiment of a method for configuring a plurality of sets of resources according to an embodiment of this application. As shown in the figure, UE 1 to UE 3 that are identified as large-packet user equipments may support allocation of a plurality of sets of short-periodicity semi-persistent SRS resources. First, the access network device may determine service requirements of the UE 1 to the UE 3 depending on whether there is an uplink scheduling request message. If the UE 1 to the UE 3 all have service requirements, but a semi-persistent SRS resource 3 has been activated for the UE 3 by sending an uplink scheduling request to the access network device, and the UE 1 preferentially sends an uplink scheduling request to the access network device, the access network device activates a semi-persistent SRS resource 1 for the UE 1. Then, when the UE 2 sends an uplink scheduling request to the access network device, if the access network device activates the semi-persistent SRS resource 1 for the UE 2, a collision with the active semi-persistent SRS resource 1 of the UE 1 occurs. In this case, the access network device may activate another semi-persistent SRS resource for the UE 2. For example, if a semi-persistent SRS resource 2 is in an idle and inactive state, the access network device may activate the semi-persistent SRS resource 2 for the UE 2 by using a MAC CE. Thus, after being activated by the access network device, an activated semi-persistent SRS resource can be used by a user equipment that encounters a collision. This reduces RRC signaling reconfiguration, thereby reducing RRC signaling overheads.

It should be understood that, during actual application, if a plurality of sets of semi-persistent SRS resources are configured for user equipments in a same cell, there are a large quantity of user equipments in the same cell, and a quantity of semi-persistent SRS resources that can be allocated is limited, all the limited semi-persistent SRS resources may have been occupied. In this case, the access network device may use the foregoing round-robin scheduling method for the semi-persistent SRS resources.

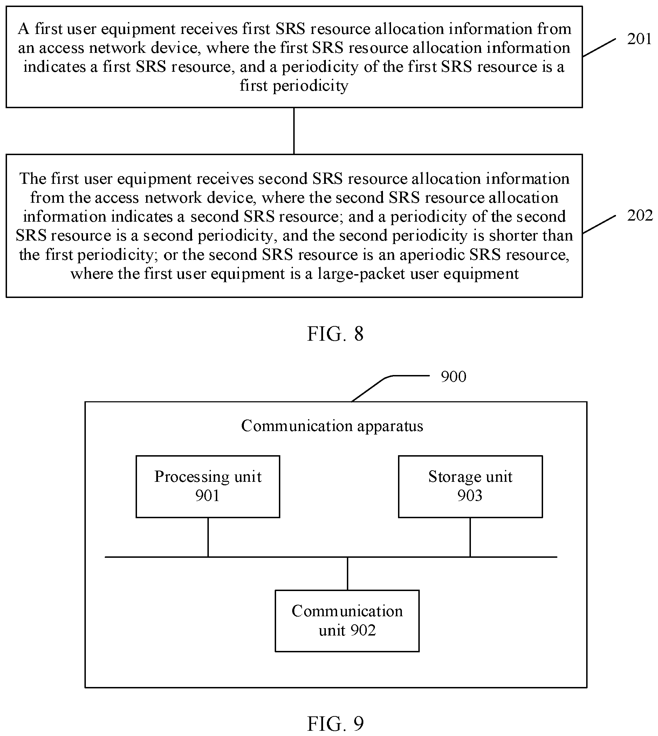

With reference to the foregoing descriptions, the following describes in detail the resource allocation method used in embodiments of this application and performed by a first user equipment. FIG. 8 is a schematic diagram of an embodiment of a resource allocation method according to an embodiment of this application.

201. The first user equipment receives first SRS resource allocation information from an access network device, where the first SRS resource allocation information indicates a first SRS resource, and a periodicity of the first SRS resource is a first periodicity.

In this embodiment, the first user equipment receives the first SRS resource allocation information from the access network device, where the first SRS resource allocation information may indicate the first SRS resource, and the periodicity of the first SRS resource is the first periodicity.

Specifically, the first SRS resource may be a periodic SRS resource. The first user equipment may receive the periodic SRS resource from the access network device by using RRC signaling. After the periodic SRS resource is configured for the first user equipment, the resource has been activated, and does not need to be triggered by other signaling. Further, the first user equipment may further periodically receive the periodic SRS resource. In different cells, periodic SRS resources configured for the first user equipment also correspond to different first periodicities. It should be understood that, during actual application, the first periodicity may be but is not limited to 5 ms, 10 ms, 20 ms, 40 ms, 320 ms, or 640 ms.

202. The first user equipment receives second SRS resource allocation information from the access network device, where the second SRS resource allocation information indicates a second SRS resource; and a periodicity of the second SRS resource is a second periodicity, and the second periodicity is shorter than the first periodicity; or the second SRS resource is an aperiodic SRS resource, where the first user equipment is a large-packet user equipment.

In this embodiment, when the first user equipment is a large-packet user equipment, the first user equipment may further receive the second SRS resource allocation information from the access network device, where the second SRS resource allocation information may indicate the second SRS resource. When the second SRS resource is a periodic SRS resource, the periodicity of the second SRS resource may be the second periodicity, and the second periodicity is shorter than the first periodicity. In addition, the second SRS resource may alternatively be an aperiodic SRS resource.

In this embodiment of this application, when there are a large quantity of users in a cell, the first user equipment may receive a periodic SRS resource from the access network device. Further, when the first user equipment is a large-packet user equipment, the first user equipment may further receive at least one of a semi-persistent SRS resource or an aperiodic SRS resource from the access network device, to ensure that resources are preferentially allocated to the large-packet user equipment. In this way, this can improve uplink and downlink BF performance of each user equipment and improve uplink and downlink channel measurement accuracy while ensuring that an SRS resource can be allocated to the user equipment, thereby improving uplink and downlink transmission performance, for example, reducing a bit error rate of data transmission and improving a cell throughput.

Optionally, the large-packet user equipment is a user equipment whose average service data volume within a time range is greater than or equal to a target threshold. It should be understood that, during actual application, the large-packet user equipment may be determined by using a maximum value or a minimum value of a service data flow within the time range or through a comparison between a service data volume obtained by performing an operation within the time range and the target threshold. In this application, the large-packet user equipment is determined by using the average service data volume. This should not be understood as that this application is limited thereto.

The above describes the resource allocation method according to embodiments of this application with reference to FIG. 3 to FIG. 8. The following describes a communication apparatus according to embodiments of this application with reference to FIG. 9. It should be understood that the technical features described in the method embodiments are also applied to the following apparatus embodiment.

FIG. 9 is a schematic diagram of a structure of a communication apparatus 900 according to an embodiment of this application. The communication apparatus 900 may perform the methods in the foregoing method embodiments. For details, refer to the descriptions in the foregoing method embodiments. The communication apparatus 900 may be used in a communication device, a circuit, a hardware component, or a chip. For example, the communication apparatus 900 may be a terminal, a chip in the terminal, an access network device, or a chip in the access network device.

The communication apparatus 900 includes a processing unit 901 and a communication unit 902. Optionally, the communication apparatus 900 further includes a storage unit 903.

The processing unit 901 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control the apparatus (for example, a base station, a terminal, or a chip), execute a software program, and process data of the software program.

The communication unit 902 may be a signal input (receiving) or output (sending) apparatus, and is configured to transmit a signal with another network device or another component in a device.

The storage unit 903 may be an apparatus having a storage function, and may include one or more memories.

Optionally, the processing unit 901, the communication unit 902, and the storage unit 903 are connected by using a communication bus.

Optionally, the storage unit 903 may exist independently, and is connected to the processing unit 901 by using a communication bus. The storage unit 903 may alternatively be integrated with the processing unit 901.

The communication apparatus 900 may be the terminal in embodiments of this application. A schematic diagram of the terminal may be shown in FIG. 2B. Optionally, the communication unit 902 in the apparatus 900 may include an antenna and a transceiver of the terminal, for example, the transceiver 212 and the antenna 216 in FIG. 2B. Optionally, the communication unit 902 may further include an output device and an input device, for example, an output device 214 and an input device 215 in FIG. 2B.

The communication apparatus 900 may be a chip in the terminal in embodiments of this application. The communication unit 902 may be an input or output interface, a pin, a circuit, or the like. The storage unit 903 may be a register, a cache, a RAM, or the like. The storage unit 903 may be integrated with the processing unit 901. The storage unit 903 may be a ROM or another type of static storage device that can store static information and instructions. The storage unit 903 may be independent of the processing unit 901. Optionally, with development of wireless communication technologies, the transceiver may be integrated into the communication apparatus 900. For example, the transceiver 212 shown in FIG. 2B is integrated into the communication unit 902.

When the communication apparatus 900 is a terminal or a chip in the terminal, the processing unit 901 may complete the method performed by the terminal in the foregoing embodiments.

In a possible design, the processing unit 901 may include instructions, and the instructions may be run on the processor, so that the communication apparatus 900 performs the method of the terminal in the foregoing embodiments.

In another possible design, the storage unit 903 stores instructions, and the instructions may be run on the processing unit 901, so that the communication apparatus 900 performs the method of the terminal in the foregoing embodiments. Optionally, the storage unit 903 may further store data. Optionally, the processing unit 901 may alternatively store instructions and/or data.

For example, the communication unit 902 may receive first SRS resource allocation information from an access network device, where the first SRS resource allocation information indicates a first SRS resource, and a periodicity of the first SRS resource is a first periodicity. The communication unit 902 may receive second SRS resource allocation information from the access network device, where the second SRS resource allocation information indicates a second SRS resource; and a periodicity of the second SRS resource is a second periodicity, and the second periodicity is shorter than the first periodicity; or the second SRS resource is an aperiodic SRS resource, where a first user equipment is a large-packet user equipment. The storage unit 902 may store the first SRS resource allocation information and the second SRS resource allocation information.

For others, refer to the method of the terminal in the foregoing embodiments. Details are not described herein again.

The communication apparatus 900 may be an access network device in embodiments of this application. A schematic diagram of the access network device may be shown in FIG. 2A. Optionally, the communication unit 902 in the apparatus 900 may include an antenna and a transceiver of the access network device, for example, the antenna 115 and the transceiver 113 in FIG. 2A. Optionally, the communication unit 902 may further include a network interface, for example, the network interface 114 in FIG. 2A.

The communication apparatus 900 may be a chip in the access network device in embodiments of this application. The communication unit 902 may be an input or output interface, a pin, a circuit, or the like. The storage unit 903 may be a register, a cache, a RAM, or the like. The storage unit 903 may be integrated with the processing unit 901. The storage unit 903 may be a ROM or another type of static storage device that can store static information and instructions. The storage unit 903 may be independent of the processing unit 901.

Optionally, with development of wireless communication technologies, the transceiver may be integrated into the communication apparatus 900. For example, the transceiver 113 shown in FIG. 2A is integrated into the communication unit 902.

When the communication apparatus 900 is the access network device or the chip in the access network device, the processing unit 901 may complete the method performed by the access network device in the foregoing embodiments.

In a possible design, the processing unit 901 may include instructions, and the instructions may be run on the processor, so that the communication apparatus 900 performs the method of the access network device in the foregoing embodiments.

In another possible design, the storage unit 903 stores instructions, and the instructions may be run on the processing unit 901, so that the communication apparatus 900 performs the method of the access network device in the foregoing embodiments. Optionally, the storage unit 903 may further store data. Optionally, the processing unit 901 may alternatively store instructions and/or data.

For example, the communication unit 902 may send first SRS resource allocation information to a first user equipment, where the first SRS resource allocation information indicates a first SRS resource, and a periodicity of the first SRS resource is a first periodicity. The communication unit 902 may send second SRS resource allocation information to the first user equipment, where the second SRS resource allocation information indicates a second SRS resource; and a periodicity of the second SRS resource is a second periodicity, and the second periodicity is shorter than the first periodicity; or the second SRS resource is an aperiodic SRS resource, where the first user equipment is a large-packet user equipment.

For example, the processing unit 901 may further determine, based on a service data volume of the first user equipment within a time range, whether the first user equipment is a large-packet user equipment.

For example, when the access network device is a target access network device, the communication unit 902 may further receive a handover message from a source access network device, where the handover message includes information used to indicate that the first user equipment is a large-packet user equipment.

For example, the communication unit 902 may send the second SRS resource allocation information to a second user equipment, where the second user equipment is a large-packet user equipment; and the communication unit 902 may further activate the second SRS resource for the first user equipment or the second user equipment simultaneously.

For example, when the processing unit 901 may determine to activate the second SRS resource for the first user equipment, the communication unit 902 starts a timer. Further, after the processing unit 901 may determine that the timer expires, the communication unit 902 deactivates the second SRS resource for the first user equipment, and activates the second SRS resource for the second user equipment.

For example, when the second SRS resource allocation information further indicates a third SRS resource, a periodicity of the third SRS resource is a third periodicity, and the third periodicity is shorter than the first periodicity, the communication unit 902 may send the second SRS resource allocation information to a second user equipment, where the second user equipment is a large-packet user equipment. Further, when activating the second SRS resource for the first user equipment, the communication unit 902 activates the third SRS resource for the second user equipment; or when activating the third SRS resource for the first user equipment, the access network device activates the second SRS resource for the second user equipment.

For others, refer to the method of the access network device in the foregoing embodiments. Details are not described herein again.

The foregoing describes the flowcharts of the methods in embodiments of this application. It should be understood that the terminal may have functional units (means) corresponding to the steps of the method or the procedure of the terminal, and the access network device may have functional units corresponding to the steps of the method or the procedure of the access network device. One or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedure.

The processor in this application may include but is not limited to at least one of the following computing devices that run software: a central processing unit (central processing unit, CPU), a microprocessor, a digital signal processor (DSP), a microcontroller unit (microcontroller unit, MCU), or an artificial intelligence processor. Each computing device may include one or more cores configured to perform an operation or processing by executing software instructions. The processor may be an independent semiconductor chip, or may be integrated with another circuit to form a semiconductor chip. For example, the processor and another circuit (for example, an encoding/decoding circuit, a hardware acceleration circuit, or various buses and interface circuits) may form an SoC (system-on-a-chip). Alternatively, the processor may be integrated into an ASIC as a built-in processor of the ASIC, and the ASIC integrated with the processor may be independently packaged or may be packaged with another circuit. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmabler-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

The bus may further include a power bus, a control bus, a status signal bus, and the like, in addition to a data bus. However, for clear description, various types of buses in the figures are marked as the bus.

In an implementation process, the steps in the foregoing methods may be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described herein again.

The foregoing describes the flowcharts of the methods in embodiments of this application. It should be understood that the terminal may have functional units (means) corresponding to the steps of the method or the procedure of the terminal, and the access network device may have functional units corresponding to the steps of the method or the procedure of the access network device. One or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedure.

The processor in this application may include but is not limited to at least one of the following computing devices that run software: a central processing unit (central processing unit, CPU), a microprocessor, a digital signal processor (DSP), a microcontroller unit (microcontroller unit, MCU), or an artificial intelligence processor. Each computing device may include one or more cores configured to perform an operation or processing by executing software instructions. The processor may be an independent semiconductor chip, or may be integrated with another circuit to form a semiconductor chip. For example, the processor and another circuit (for example, an encoding/decoding circuit, a hardware acceleration circuit, or various buses and interface circuits) may form an SoC (system-on-a-chip). Alternatively, the processor may be integrated into an ASIC as a built-in processor of the ASIC, and the ASIC integrated with the processor may be independently packaged or may be packaged with another circuit. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmabler-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

The bus may further include a power bus, a control bus, a status signal bus, and the like, in addition to a data bus. However, for clear description, various types of buses in the figures are marked as the bus.

In an implementation process, the steps in the foregoing methods may be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described herein again.

According to the method provided in embodiments of this application, an embodiment of this application further provides a system, including the foregoing apparatus and one or more network devices.

As defined in embodiments of this application, a one-way communication link from an access network to a terminal is a downlink, data transmitted on the downlink is downlink data, and a transmission direction of the downlink data is referred to as a downlink direction; a one-way communication link from the terminal to the access network is an uplink, data transmitted on the uplink is uplink data, and a transmission direction of the uplink data is referred to as an uplink direction.

It should be further understood that, "first", "second", "third", "fourth", and various numbers in this specification are merely used for differentiation for ease of description, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that, in embodiments of this application, sequence numbers of the foregoing processes do not mean execution sequences. The execution sequences of the processes should be determined based on functions and internal logic of the processes, and should not constitute any limitation to implementation processes of embodiments of this application.

A person of ordinary skill in the art may be aware that, various illustrative logical blocks (illustrative logical block) and steps (step) that are described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, the apparatus, and the method may be implemented in other manners. For example, the foregoing apparatus embodiments are merely examples. For example, division into the units is merely logical function division. During actual implementation, another division manner may be used. A plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electrical, a mechanical, or another similar form.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource allocation method, comprising:
sending, by an access network device, first SRS resource allocation information to a first user equipment, wherein the first SRS resource allocation information indicates a first SRS resource, and a periodicity of the first SRS resource is a first periodicity; and
sending, by the access network device, second SRS resource allocation information to the first user equipment, wherein the second SRS resource allocation information indicates a second SRS resource; and a periodicity of the second SRS resource is a second periodicity, and the second periodicity is shorter than the first periodicity; or the second SRS resource is an aperiodic SRS resource, wherein
the first user equipment is a large-packet user equipment.

2. The method according to claim 1, wherein the large-packet user equipment is a user equipment whose average service data volume within a time range is greater than or equal to a target threshold.

3. The method according to claim 1 or 2, wherein the method further comprises:
determining, by the access network device based on a service data volume of the first user equipment within the time range, whether the first user equipment is the large-packet user equipment.

4. The method according to claim 1 or 2, wherein the access network device is a target access network device, and the method further comprises:
receiving, by the access network device, a handover message from a source access network device, wherein the handover message comprises information used to indicate that the first user equipment is a large-packet user equipment.

5. The method according to any one of claims 1 to 4, wherein the method further comprises:
sending, by the access network device, the second SRS resource allocation information to a second user equipment, wherein the second user equipment is a large-packet user equipment; and
activating, by the access network device, the second SRS resource for the first user equipment or the second user equipment simultaneously.

6. The method according to claim 5, wherein the method further comprises:
when activating the second SRS resource for the first user equipment, starting, by the access network device, a timer; and
after the timer expires, deactivating, by the access network device, the second SRS resource for the first user equipment, and activating the second SRS resource for the second user equipment.

7. The method according to any one of claims 1 to 4, wherein the second SRS resource allocation information further indicates a third SRS resource, a periodicity of the third SRS resource is a third periodicity, the third periodicity is shorter than the first periodicity, and the method further comprises:
sending, by the access network device, the second SRS resource allocation information to a second user equipment, wherein the second user equipment is a large-packet user equipment; and
when activating the second SRS resource for the first user equipment, activating, by the access network device, the third SRS resource for the second user equipment; or when activating the third SRS resource for the first user equipment, activating, by the access network device, the second SRS resource for the second user equipment.

8. A resource allocation method, comprising:
receiving, by a first user equipment, first SRS resource allocation information from an access network device, wherein the first SRS resource allocation information indicates a first SRS resource, and a periodicity of the first SRS resource is a first periodicity; and
receiving, by the first user equipment, second SRS resource allocation information from the access network device, wherein the second SRS resource allocation information indicates a second SRS resource; and a periodicity of the second SRS resource is a second periodicity, and the second periodicity is shorter than the first periodicity; or the second SRS resource is an aperiodic SRS resource, wherein
the first user equipment is a large-packet user equipment.

9. The method according to claim 8, wherein the large-packet user equipment is a user equipment whose average service data volume within a time range is greater than a target threshold.

10. An apparatus, wherein the apparatus is configured to perform the method according to any one of claims 1 to 7.

11. An apparatus, wherein the apparatus is configured to perform the method according to claim 8 or 9.

12. A computer program product, wherein the program product comprises a program; and when the program is run, the method according to any one of claims 1 to 7 or the method according to claim 8 or 9 is enabled to be performed.

13. A resource allocation apparatus, comprising a processor, wherein the processor is coupled to a memory, the memory is configured to store a computer program or instructions, and the processor is configured to execute the computer program or the instructions in the memory, to enable the method according to any one of claims 1 to 7 or the method according to claim 8 or 9 to be performed.

14. A chip, wherein the chip comprises a processor and a communication interface, the communication interface is coupled to the processor, and the processor is configured to run a computer program or instructions, to enable the method according to any one of claims 1 to 7 or the method according to claim 8 or 9 to be performed.

15. A computer-readable storage medium, storing a program or instructions used to implement the method according to any one of claims 1 to 7 or the method according to claim 8 or 9.

16. A communication system, comprising an access network device that is configured to perform the method according to any one of claims 1 to 7 and a user equipment that is configured to perform the method according to claim 8 or 9.
